# EUROPEAN PATENT APPLICATION

(11) **EP 4 633 124 A1**
(43) Date of publication of application: **15.10.2025**
(21) Application number: 24818323.8
(22) Date of filing: 19.03.2024
(51) Int. Cl.: H04M 1/68

(54) **MICROPHONE CONTROL SYSTEM AND ELECTRONIC DEVICE**

(30) Priority: 08.06.2023 CN 202321457687 U
(71) Applicant: Huawei Technologies Co., Ltd., Shenzhen, Guangdong 518129 (CN)
(72) Inventor: LI, Jinkui, Shenzhen, Guangdong 518129 (CN)
(74) Representative: Pfenning, Meinig & Partner mbB
(86) International application number: PCT/CN2024/082341
(87) International publication number: WO 2024/250786

(57) **Abstract**

This application provides a microphone control system and an electronic device, and relates to the field of electronic technologies. The microphone control system includes an identity authentication module, a control module, a power supply module, and a microphone module that are sequentially connected. The identity authentication module is configured to: verify identity information of a user based on a trigger operation of the user, and send a switch signal to the control module after the verification succeeds. The control module is configured to control a power supply status of the power supply module based on the switch signal, where the power supply status includes a power-off state and a normal state. The power supply module is configured to supply power to the microphone module when being in the normal state. This can effectively resolve a technical problem that call content of the user is likely to leak.

## Description

### TECHNICAL FIELD

This application relates to the field of electronic technologies, and in particular, to a microphone control system and an electronic device.

### BACKGROUND

**In** a process in which a user makes a call by using an electronic device, the user usually performs muting through software, to prevent a peer end of the electronic device from hearing content of a conversation between the user and a person at a local end, to protect user privacy. Specifically, after detecting a trigger operation performed by the user on a microphone mute control displayed on an application interface, the electronic device may receive, through a microphone mute interface, audio data collected by a microphone, edit the audio data into a muted audio, and transmit the muted audio to the peer end, so that the peer end cannot hear a voice of the local end.

However, if muting is performed through the software, the microphone remains in an enabled state. After system permission of the electronic device of the user is obtained through malicious software, unmuting may be performed through a standard interface. Consequently, the audio data collected by the microphone is transmitted to the peer end, leading to information leakage.

### SUMMARY

This application provides a microphone control system and an electronic device, to resolve a technical problem that call content of a user is likely to leak to some extent.

To achieve the foregoing objective, this application uses the following technical solutions.

According to a first aspect, this application provides a microphone control system. The microphone control system includes an identity authentication module, a control module, a power supply module, and a microphone module that are sequentially connected. The identity authentication module is configured to: verify identity information of a user based on a trigger operation of the user, and send a switch signal to the control module after the verification succeeds. The control module is configured to control a power supply status of the power supply module based on the switch signal, where the power supply status includes a power-off state and a normal state. The power supply module is configured to supply power to the microphone module when being in the normal state.

Based on the microphone control system provided in this application, the identity authentication module may verify the identity information of the user based on a trigger operation of switching an operating status of the microphone module by the user, and send the switch signal to the control module after the verification succeeds. The identity information of the user is verified, to effectively avoid an operation of switching the operating status of the microphone module performed by a non-user, and avoid an accidental trigger of the user. The control module may control the operating status of the microphone module by controlling the power supply status of the power supply module to the microphone module based on the switch signal, that is, the microphone module operates when the power supply module is in the normal state, and the microphone module cannot collect audio data when the power supply module is in the power-off state. In this case, a mute function is implemented by powering off the microphone module. This can prevent malicious software from obtaining, through a standard interface, audio data obtained by the microphone module in a mute state, improve security, and effectively avoid information leakage.

In a possible design, the identity authentication module includes an SOC chip, a trigger apparatus, and an information collection apparatus. The trigger apparatus and the information collection apparatus are both connected to the SOC chip, and the SOC chip is connected to the control module. The trigger apparatus is configured to detect the trigger operation. The SOC chip is configured to control, based on the trigger operation, the information collection apparatus to collect and verify the identity information.

In this optional manner, the trigger operation may be adjusting a posture of an electronic device on which the microphone control system is disposed, or triggering a mode switching control displayed on the electronic device or another physical button. The trigger apparatus may be at least one sensor configured to detect the posture of the electronic device or detect the trigger operation performed by the user on the mode switching control. The identity information of the user may be at least one authentication credential representing the identity information of the user to which the electronic device belongs, and includes but is not limited to a password preset by the user, a personal identification number, a fingerprint, a face image, a retina image, or other biometric feature information.

Optionally, the trigger apparatus includes a direction sensor and/or an angle sensor.

Optionally, the information collection apparatus includes a fingerprint sensor and/or an image sensor.

Optionally, the control module is a security chip. The security chip is a processor that can be used to run a trusted execution environment (Trusted Execution Environment, TEE). Compared with a mobile operating system (for example, iOS or Android) running on a common chip (for example, an SOC chip or a CPU chip), an operating system in the TEE execution environment has higher security, and is less susceptible to control by the malicious software. Security of the microphone control system can be further improved by controlling the power supply status of the power supply module by using the security chip.

In a possible design, the power supply module includes a switch module and a power module. The power module is connected to the microphone module through the switch module, and the control module is connected to the switch module. The control module is configured to control the operating status of the microphone module based on the switch signal by controlling an on/off status of the switch module, where the on/off status includes an on state and an off state. The power module is configured to supply power to the microphone module when the switch module is in the on state.

In a possible design, the microphone module includes at least one microphone.

In a possible design, the switch module includes one switch chip; the switch chip is connected to both the control module and the at least one microphone; and the control module is configured to control an on/off status of the switch chip based on the switch signal.

Based on this possible design, the control module may simultaneously control an operating status of all microphones in the microphone module by controlling the on/off status of the switch chip by using the switch signal, so that all the microphones are in an enabled state or a disabled state.

In another possible design, the switch module includes at least two switch chips, a quantity of microphones is the same as a quantity of switch chips, the at least two switch chips each are connected to the control module, and the switch chips are connected to the microphones in one-to-one correspondence; and the control module is configured to control on/off statuses of the at least two switch chips based on the switch signal.

In a possible design, the microphone control system further includes an audio driver module; the audio driver module is connected to both the identity authentication module and the microphone module; the identity authentication module is further configured to: determine an operating status of the microphone module based on the switch signal, and send the operating status to the audio driver module, where the operating status is an enabled state or a disabled state; and the audio driver module is configured to perform fault detection on the microphone module when the microphone module is in the enabled state.

Based on this possible design, when detecting that the audio data transmitted by the microphone module is zero, the audio driver module may determine that the microphone is faulty, and perform fault repair on the microphone module. However, in the microphone control system provided in this application, when the microphone module is in the disabled state, the microphone cannot collect the audio data. If the audio driver module performs fault detection on the microphone module when the microphone module is in the disabled state, a problem of false detection occurs. Therefore, after verifying the identity information of the user, the identity authentication module may transmit the operating status of the microphone module to the microphone driver module, so that the microphone driver module performs fault detection only when the microphone module is in the enabled state, avoiding false detection.

According to a second aspect, this application provides an electronic device. The electronic device includes the microphone control system provided in the various possible designs of the first aspect.

### BRIEF DESCRIPTION OF DRAWINGS

FIG. 1 is a diagram of a structure of a microphone control system according to an embodiment of this application;
FIG. 2 is a diagram of a structure of another microphone control system according to an embodiment of this application;
FIG. 3 is a diagram of a structure of another microphone control system according to an embodiment of this application;
FIG. 4 is a diagram of a structure of another microphone control system according to an embodiment of this application;
FIG. 5 is a diagram of a structure of another microphone control system according to an embodiment of this application;
FIG. 6 is a diagram of a structure of another microphone control system according to an embodiment of this application;
FIG. 7 is a diagram of a structure of another microphone control system according to an embodiment of this application; and
FIG. 8 is a diagram of a structure of an electronic device according to an embodiment of this application.

### Reference numerals:

100: microphone control system; 110: identity authentication module; 111: trigger apparatus; 112: information collection apparatus; 113: SOC chip; 120: control module; 121: security chip; 130: power supply module; 131: power module; 132: switch module; 1321: switch chip; 140: microphone module; 141: microphone; 150: audio driver module; 200: electronic device; 210: housing; 211: sound inlet hole.

### DESCRIPTION OF EMBODIMENTS

A microphone is usually disposed in an intelligent electronic device like a mobile phone or a tablet computer. When the electronic device is in a power-on state, the microphone is always in a power-on state. Regardless of whether a user uses the electronic device for a voice call, the microphone continuously picks up a sound in an environment. In this case, the intelligent device may have a risk of leaking user privacy.

In a conventional technology, in a process in which a user makes a call with a peer end by using an intelligent electronic device, a microphone mute control displayed on an application interface may be used to prevent the peer end from receiving content of a conversation between the user and a person at a local end. Specifically, in this process, a microphone remains in a power-on state, and collected audio data is transmitted to an audio processing module in the electronic device through an audio transmission interface. After detecting that the user triggers the microphone mute control, the electronic device may control the audio processing module to clear the received audio data and then transmit audio data to the peer end, so that the audio data received by the peer end is mute data. However, after the malicious software infiltrates an operating system of the electronic device and obtains operating system permission of the electronic device, the malicious software may cancel, through the transmission interface, the clearing operation performed by the audio processing module on the received audio data, to transmit the audio data to the peer end, and there is still a risk of leakage of user privacy.

To resolve the foregoing technical problem, this application provides a microphone control system and an electronic device. An identity authentication module configured to verify identity information of a user, a control module, a power supply module configured to supply power, and a microphone module are sequentially connected. In this case, the identity authentication module verifies the identity information of the user based on a mode switching operation of the user and then sends a switch signal to the control module. This effectively avoids a mode switching operation performed by a non-user on the microphone module. The control module may control, based on the switch signal sent by the identity authentication module, an operating status of a microphone by controlling a power supply status of the power supply module to the microphone module, to implement a mute function by powering off the microphone.

To make the objectives, technical solutions, and advantages of embodiments of this application clearer, the following clearly and completely describes the technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

In the descriptions of embodiments of this application, the terms "first" and "second" are merely intended for description, and shall not be understood as an indication or implication of relative importance or implicit indication of a quantity of indicated technical features. Therefore, a feature limited by "first" or "second" may explicitly or implicitly include at least one feature.

In the descriptions of this application, "a plurality of" means at least two, for example, two or three, unless otherwise clearly limited.

In this application, unless otherwise specified and limited, terms such as "installation", "connecting", "connection", and "fastened" should be understood in a broad sense. For example, the term "connection" may be a fixed connection, a detachable connection, an integration, a direct connection, an indirect connection by using an intermediate medium, or an internal connection of two elements or an interaction relationship between two elements, unless otherwise specified. A person of ordinary skill in the art may understand specific meanings of the foregoing terms in this application based on a specific case.

In this application, unless otherwise specified and limited, when a first feature is "above" or "below" a second feature, the first feature may be in direct contact with the second feature, or the first feature may be in indirect contact with the second feature through an intermediate medium. Further, the first feature is "above" the second feature, where "above" may be that the first feature is right above or obliquely above the second feature or merely indicate that the first feature is horizontally higher than the second feature. The first feature is "below" the second feature, where "below" may be that the first feature is right below or obliquely below the second feature or merely indicate that the first feature is horizontally lower than the second feature.

In the descriptions of this application, it should be understood that the terms such as "inner", "outer", "side", "upper", "bottom", "front", and "back" indicate an orientation or a position relationship only for ease of describing this application and simplifying description, but do not indicate or imply that a specified apparatus or element needs to have a specific orientation and be constructed and operated in a specific orientation. Therefore, this cannot be understood as a limitation on this application.

In the description of this application, it should be noted that the term "and/or" describes only an association relationship for describing associated objects and represents that three relationships may exist. For example, A and/or B may represent the following three cases: Only A exists, both A and B exist, and only B exists.

It should be further noted that a same reference numeral in embodiments of this application represents a same component part or a same part or component. For a same part or component in embodiments of this application, only one part or component may be marked with a reference numeral as an example in the figure. It should be understood that, for another same part or component, the reference numeral is also applicable.

A microphone control system 100 provided in embodiments of this application is used in an electronic device 200 having a voice call function. The electronic device 200 may be a portable electronic device, for example, a mobile phone, a tablet computer, a wearable device (for example, a smartwatch or a smart band), a vehicle-mounted device, a laptop computer, or a desktop computer. An example embodiment of the portable electronic device includes but is not limited to a portable electronic device running another operating system.

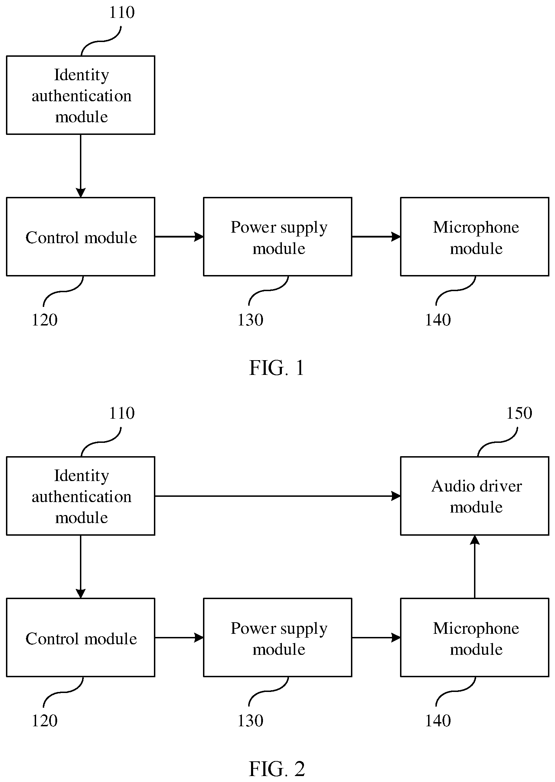

Refer to a diagram of a structure of a microphone control system 100 shown as FIG. 1. In a possible implementation, the microphone control system 100 provided in this embodiment of this application includes an identity authentication module 110, a control module 120, a power supply module 130, and a microphone module 140 that are sequentially connected. The identity authentication module 110 is configured to: verify identity information of a user based on a trigger operation of the user, and send a switch signal to the control module 120 after the verification succeeds. The control module 120 is configured to: control a power supply status of the power supply module 130 based on the switch signal, and control an operating status of the microphone module 140 by controlling the power supply status of the power supply module 130. The power supply status of the power supply module 130 includes a power-off state and a normal state. The operating status of the microphone module 140 includes an enabled state and a disabled state. The power supply module 130 is configured to supply power to the microphone module 140 when being in the normal state.

In this embodiment of this application, the trigger operation of the user is any preset operation that can be used to switch the operating status of the microphone module 140. After detecting the trigger operation of the user, the identity authentication module 110 can collect the identity information of the user, verify the identity information of the user, and send the switch signal corresponding to the trigger operation to the control module 120 after the verification succeeds. The microphone module 140 may control the enabled and disabled operating status of the microphone module 140 based on the switch signal and by controlling the power supply status of the power supply module 130. To be specific, when the power supply module 130 is in the normal state, the microphone module 140 is in the enabled state, and when the power supply module 130 is in the power-off state, the microphone module 140 is in the disabled state.

For example, if the trigger operation of the user indicates to switch the operating status of the microphone module 140 from the enabled state to the disabled state, the switch signal generated by the identity authentication module 110 after the verification succeeds may indicate the control module 120 to control the power supply module 130 to switch from the normal state to the power-off state. If the trigger operation of the user indicates to switch the operating status of the microphone module 140 from the disabled state to the enabled state, the switch signal generated by the identity authentication module 110 after the verification succeeds may indicate the control module 120 to control the power supply module 130 to switch from the power-off state to the normal state.

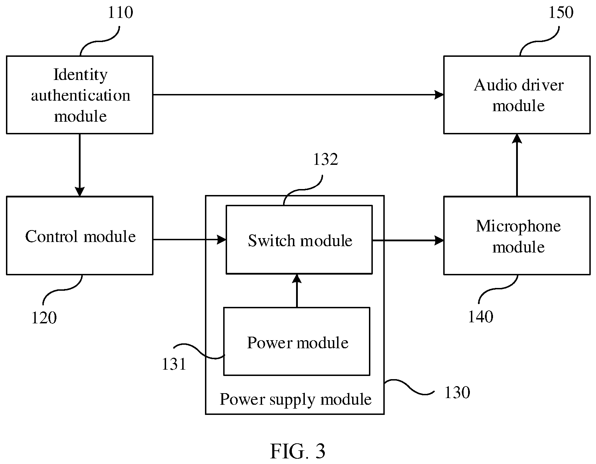

Refer to a diagram of a structure of another microphone control system 100 shown as FIG. 3. A power supply module 130 in the microphone control system 100 provided in this application includes a power module 131 and a switch module 132. A control module 120 is connected to the switch module 132, and the power module 131 is connected to a microphone module 140 through the switch module 132. The control module 120 is configured to control, based on a switch signal sent by an identity authentication module 110, an operating status of the microphone module 140 by controlling an on/off status of the switch module 132. The on/off status of the switch module 132 includes an on state and an off state. The power module 131 may be configured to supply power to the microphone module 140 when the switch module 132 is in the on state. That is, when the switch module 132 is in the on state, the microphone module 140 is in the enabled state, and the microphone module 140 may continuously pick up a sound when being in the enabled state; or when the switch module 132 is in the off state, the microphone 141 is in the disabled state, and the microphone 141 cannot pick up a sound in a surrounding environment when being in the disabled state.

As an example rather than a limitation, the power module 131 may be a battery.

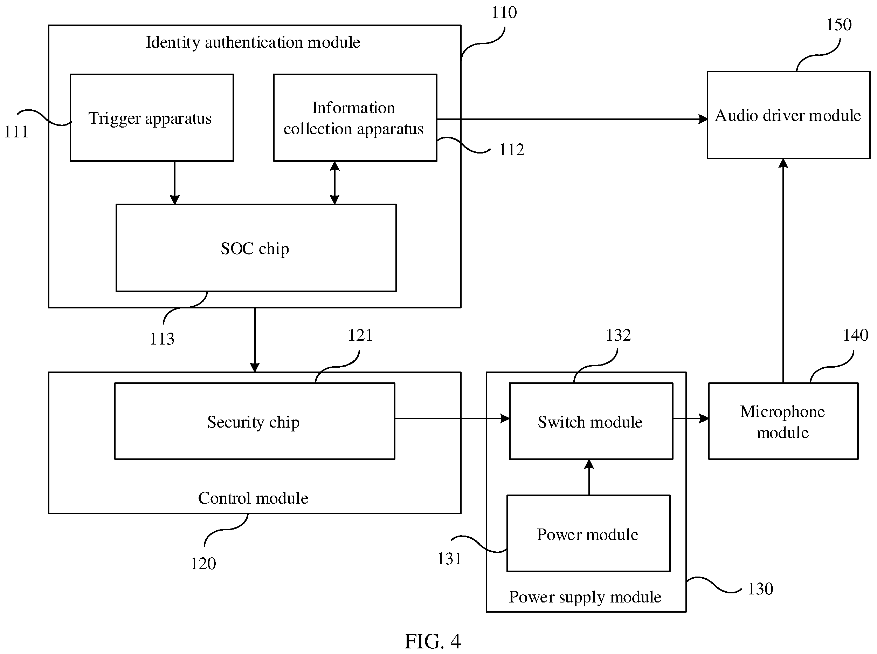

The identity authentication module 110 in the microphone control system 100 provided in this embodiment of this application is any functional module that is in the electronic device 200 and that may be configured to detect identity information of a user to which an electronic device belongs. In an embodiment, as shown by a diagram of a structure of another microphone control system 100 shown as FIG. 4, an identity authentication module 110 may include an SOC (System On a Chip, system on a chip) chip 113, a trigger apparatus 111, and an information collection apparatus 112. The trigger apparatus 111 and the information collection apparatus 112 are both connected to the SOC chip 113, and the SOC chip 113 is connected to a control module 120.

The SOC chip 113 is a system on chip. The SCO chip 113 may run a mobile operating system like an Android (Android) system, a Microsoft windows System (Windows), an Apple mobile operating system (iOS), or a HarmonyOS (HarmonyOS). The SCO chip 113 may include one or more processors, a memory, an analog circuit module, a digital-analog mixed signal module, on-chip programmable logic, and the like. In the microphone control system 100 provided in this application, the trigger apparatus 111 is configured to detect a trigger operation of a user, and the SCO chip may be configured to: when the trigger apparatus 111 detects the trigger operation of the user, control the information collection apparatus 112 to collect identity information of the user and verify the identity information of the user.

In this embodiment of this application, the trigger operation of the user may be adjusting a posture of an electronic device 200 on which the microphone control system 100 is disposed, or triggering a mode switching control displayed on the electronic device 200 and/or another physical button. Correspondingly, the trigger apparatus 111 in the microphone control system 100 may be at least one sensor configured to detect the posture of the electronic device 200 or detect the trigger operation performed by the user on the mode switching control.

In an example, assuming that the electronic device 200 on which the microphone control system 100 is disposed includes a foldable display, the trigger operation of the user may be switching between two states of the display of the electronic device 200. The two states of the display are a folded state and an unfolded state. Correspondingly, the trigger apparatus 111 in the microphone control system 100 may be an angle sensor. The angle sensor is configured to: detect a folding angle of the display in real time and send the detected folding angle to the SOC chip 113. The SOC chip 113 may determine, based on a size between the received folding angle and a preset angle, that the display is in the folded state or the unfolded state. For example, if the folding angle of the display is adjusted from a first angle to a second angle, where the first angle is greater than or equal to the preset angle and is less than or equal to 180 degrees, and the second angle is greater than or equal to 0 and is less than the preset angle, it may be determined that a current trigger operation of the user is switching the display from the unfolded state to the folded state, and the trigger operation indicates to switch an operating status of the microphone module 140 from an enabled state to a disabled state. If the folding angle of the display is adjusted from the second angle to the first angle, it may be determined that the current trigger operation of the user is switching the display from the folded state to the unfolded state, and the trigger operation indicates to switch the operating status of the microphone module 140 from the disabled state to the enabled state.

In another example, assuming that the electronic device 200 on which the microphone control system 100 is disposed is a non-foldable display electronic device 200, the trigger operation of the user may be switching between two placement states of the electronic device 200. The two placement states are placing a display of the electronic device 200 upward and placing the display of the electronic device 200 downward. Correspondingly, the trigger apparatus 111 in the microphone control system 100 may be a direction sensor or a gravity sensor. The trigger apparatus 111 may be configured to: detect the placement state of the electronic device 200 in real time and transmit the placement state of the electronic device 200 to the SOC chip 113. The user switching between the placement states of the electronic device 200 may indicate to switch the operating status of the microphone module 140. For example, if the user switches the placement state of the electronic device 200 from placing the display upward to placing the display downward, it may be determined that the current trigger operation of the user indicates to switch the operating status of the microphone module 140 from the enabled state to the disabled state. If the user switches the placement state of the electronic device 200 from placing the display downward to placing the display upward, it may be determined that the current trigger operation of the user indicates to switch the operating status of the microphone module 140 from the disabled state to the enabled state.

In another example, the trigger apparatus 111 may be a display of the electronic device 200 on which the microphone control system 100 is disposed, and the mode switching control used to switch between the two operating states of the microphone module 140 may be displayed on the display. The trigger operation performed by the user on the mode switching control may enable the mode switching control to display and switch between two display states. The two display states include a first display state and a second display state. The first display state indicates that the microphone module 140 is in the disabled state, and the second display state indicates that the microphone 141 is in the enabled state. In this example, the trigger operation performed by the user on the mode switching control may be a tap operation.

In this embodiment of this application, after the trigger apparatus 111 detects a trigger operation of switching the operating status of the microphone module 140 by the user, the SOC chip 113 in the identity authentication module 110 may control the information collection apparatus 112 to collect any authentication credential that can be used to represent the identity information of the user to which the electronic device 200 belongs, and verify the identity information of the user collected by the information collection apparatus 112. Specifically, the SOC chip 113 may compare the identity information of the user collected by the information collection apparatus 112 with pre-stored identity information. If the identity information of the user collected by the information collection apparatus 112 matches the pre-stored identity information, it indicates that the verification of the identity information of the user succeeds, and the SOC chip 113 may send a switch signal corresponding to the trigger operation to the control module 120.

In an example, the authentication credential used to represent the identity information of the user may be one or more of the following: a security password preset by the user, a personal identification number (Personal Identification Number, PIN), or another user authentication credential. Correspondingly, the information collection apparatus 112 may be the display, and a display box or a touch button used by the user to enter the authentication credential may be displayed on the display. In another example, the authentication credential may be one or more of the following: a user fingerprint, a face image, a retina image, or other biometric feature information. Correspondingly, the information collection apparatus 112 may be a fingerprint sensor, an image sensor, or the like. The fingerprint sensor is configured to collect fingerprint information of the user, and the image sensor is configured to collect feature information such as the face image and the retina image.

The control module 120 in the microphone control system 100 provided in this application may be a security chip 121. The security chip 121 is a processor that can be configured to run a trusted execution environment (Trusted Execution Environment, TEE), and can ensure security, confidentiality, and integrity of code and data that are loaded into the environment. Compared with a mobile operating system (for example, iOS or Android) running on a common chip (for example, an SOC chip 113 or a CPU chip), an operating system in the TEE execution environment provided by the security chip 121 has higher security, and is less susceptible to control by malicious software. Security of the microphone control system 100 can be further improved by controlling the power supply status of the power supply module 130 by using the security chip 121.

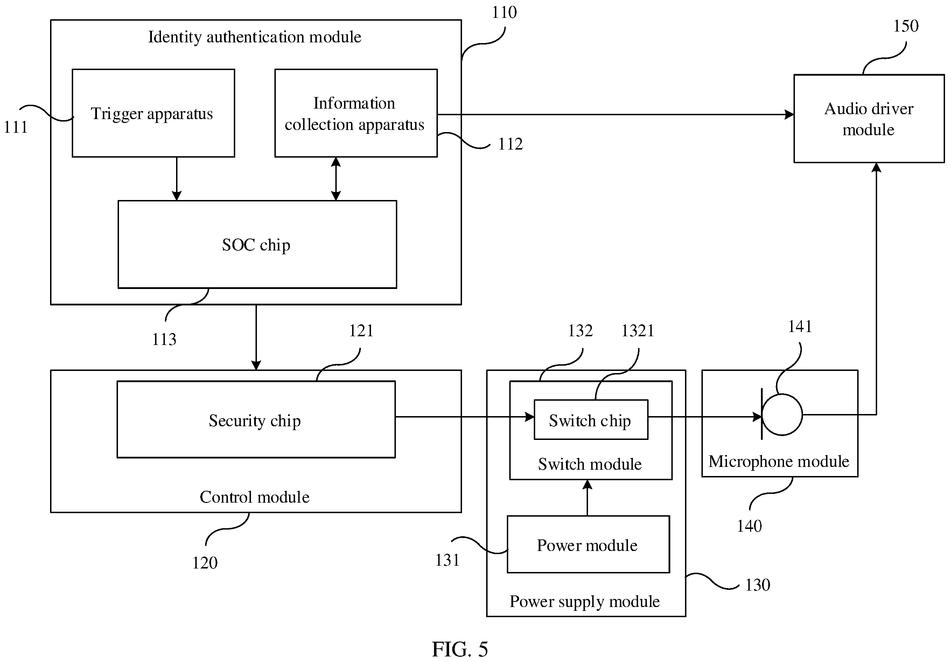

Refer to diagrams of structures of microphone control systems 100 shown as FIG. 5 to FIG. 7. A microphone module 140 may include at least one microphone 141, and a switch module 132 may include one switch chip 1321 or a plurality of switch chips 1321. The microphone 141 includes a power port. The switch chip 1321 includes a signal input port, a power input port, and a power output port. The signal input port is connected to a control module 120, and the control module 120 may send a switch signal to the switch chip 1321 via the signal input port. The power input port is connected to a power module 131, and the power output port is connected to the power port of the microphone 141 in the microphone module 140. The switch chip 1321 may determine, based on the switch signal received via the signal input port, to connect or disconnect power supply of the power module 131 to the microphone module 140.

For example, the switch signal may be at a high level or a low level. When the switch signal is at a low level, the switch chip 1321 is in an off state, the power module 131 cannot supply power to the microphone module 140, and the microphone 141 in the microphone module 140 is in a disabled state and cannot operate. When the switch signal is at a high level, the switch chip 1321 is in an on state, the power module 131 may supply power to the microphone module 140 by using the switch chip 1321, and the microphone 141 in the microphone module 140 is in an enabled state.

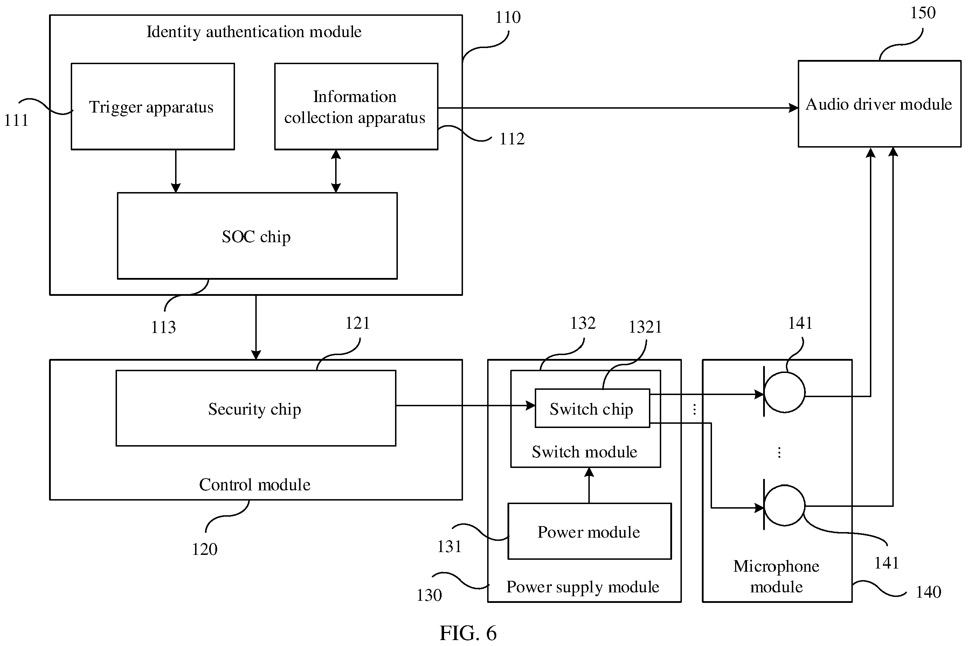

In the microphone control system 100 provided in embodiments of this application, a quantity of switch chips 1321 in the switch module 132 may be determined based on a quantity of microphones 141 in the microphone module 140. In a possible implementation, as shown in FIG. 5 and FIG. 6, when the microphone module 140 includes one or more microphones 141, the switch module 132 may include one switch chip 1321. The switch chip 1321 may include one signal input port, one power input port, and a same quantity of power output ports as the microphones 141. The power output ports of the switch chip 1321 are connected to the microphones 141 in the microphone module 140 in one-to-one correspondence.

For example, refer to a diagram of a structure of a microphone control system 100 shown as FIG. 5. Assuming that the microphone module 140 includes one microphone 141, the switch chip 1321 in the switch module 132 includes one power output port, and the power output port of the switch chip 1321 is connected to the power port of the microphone 141. Refer to a diagram of a structure of a microphone control system 100 shown as FIG. 6. It is assumed that the microphone module 140 includes two microphones 141, where one microphone 141 is configured to collect audio data of a user in an application scenario, for example, a call or recording, and the other microphone 141 is configured to collect noise in an environment to denoise the collected audio data. In this case, the switch chip 1321 may include two power output ports, and the two power output ports are connected to power supply ports of the two microphones 141 in one-to-one correspondence. The control module 120 may simultaneously control operating statuses of the two microphones 141 by controlling the on/off status of the switch chip 1321 based on the switch signal, so that the two microphones 141 are simultaneously in the enabled state or the disabled state.

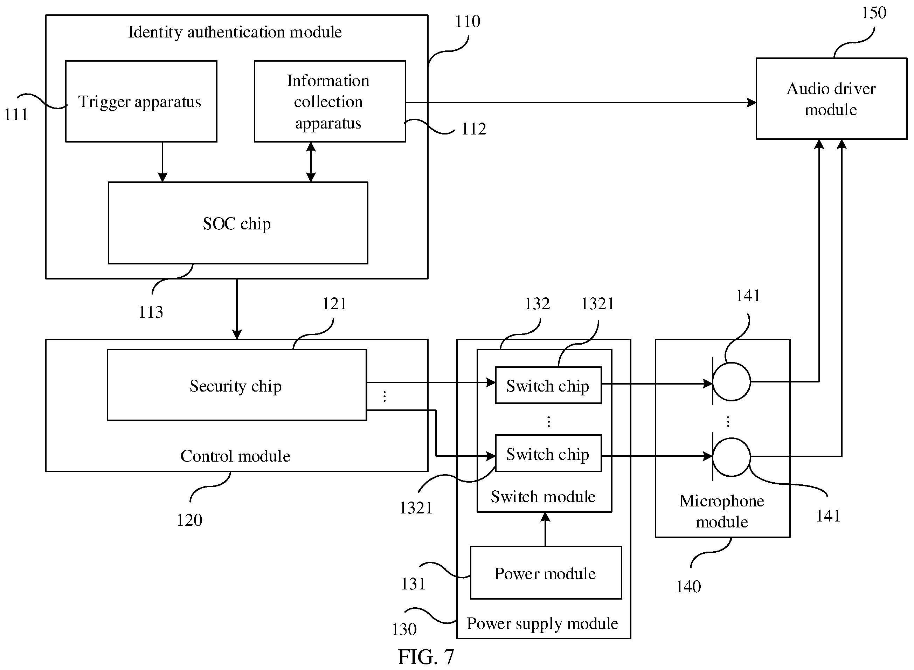

In another possible implementation, as shown in a diagram of a structure of a microphone control system 100 shown as FIG. 7, when the microphone module 140 includes a plurality of microphones 141, the switch module 132 may include a plurality of switch chips 1321, and a quantity of switch chips 1321 is the same as a quantity of microphones 141. Each switch chip 1321 includes one signal input port, one power input port, and one power output port. The signal input port of each switch chip 1321 is connected to the control module 120, the power input port of each switch chip 1321 is connected to the power module 131, and the power output port of each switch chip 1321 is connected to a power port of a corresponding microphone 141.

For example, as shown in FIG. 7, it is assumed that the microphone module 140 includes two microphones 141, where one microphone 141 is configured to collect audio data of a user in an application scenario, for example, a call or recording, and the other microphone 141 is configured to collect noise in an environment to denoise the collected audio data. In this case, the switch module 132 includes two switch chips 1321, signal input ports of the two switch chips 1321 are both connected to the control module 120, and a power input port of each switch chip 1321 is connected to the power module 131, power output ports of the two switch chips 1321 are connected to power ports of the two microphone modules 140 in one-to-one correspondence.

It should be noted that, in this implementation, a trigger operation of the user may indicate to simultaneously switch an operating status of all the microphones 141 in the microphone module 140, and the control module 120 may simultaneously send a same switch signal to the plurality of switch chips 1321, to simultaneously control the operating status of the plurality of microphones 141 by controlling an on/off status of all the switch chips 1321 in the switch module 132. The trigger operation of the user may alternatively indicate to switch an operating status of any target microphone 141 in the plurality of microphones 141. After verification of the identity information of the user succeeds, an identity authentication module 110 may send, to the control module 120 based on the trigger operation of the user, a switch signal that is used to switch an on/off status of a switch chip 1321 corresponding to the target microphone 141, so that the control module 120 switches an operating status of the microphone 141 based on the switch signal by switching the on/off status of the switch chip 1321 corresponding to the target microphone 141.

In an optional implementation, as shown by the diagram of the structure of the microphone control system 100 shown as FIG. 2 to FIG. 7, the microphone control system 100 provided in embodiments of this application further includes an audio driver module 150, the microphone 141 in the microphone module 140 further includes an audio port, and the audio driver module 150 is connected to both the SOC chip 113 in the identity authentication module 110 and an audio port of each microphone 141 in the microphone module 140. The microphone 141 in the microphone module 140 may collect the audio when being in the enabled state, and send the collected audio data to the audio driver module 150 through the audio port. The audio driver module 150 is configured to process the received audio data and send the processed audio data to a peer end or store the processed audio data.

The audio driver module 150 is further configured to perform fault detection on each microphone 141 in the microphone module 140, so that fault repair can be performed in time when the microphone 141 is faulty. As an example rather than a limitation, a common fault detection method for the microphone 141 is generally as follows: If the audio data output by the audio port of the microphone 141 and received by the audio driver module 150 is zero, it may be determined that the microphone 141 is faulty. However, based on the microphone control system 100 provided in this application, the microphone 141 cannot collect the audio data when being in the disabled state, that is, the audio data obtained by the audio driver module 150 is zero when the microphone 141 is in the disabled state. Therefore, a problem of false detection may occur in the audio driver module 150 when the microphone 141 is in the disabled state.

In the microphone control system 100 provided in this embodiment of this application, the SOC chip 113 in the identity authentication module 110 is further configured to: after the verification of the identity information of the user succeeds, determine an operating status of each microphone 141 in the microphone module 140 based on the switch signal, and send the operating status of each microphone 141 to the audio driver module 150. The audio driver module 150 may perform fault detection on the microphone 141 that is in the enabled state, to avoid a problem of false detection. For example, if the audio driver module 150 detects that the audio data transmitted by the microphone 141 that is in the enabled state is zero, it may be determined that the microphone 141 is faulty.

Further, the audio driver module 150 is further configured to perform fault repair on the microphone 141 when it is detected that the microphone 141 in the enabled state is faulty.

It should be noted that, the trigger apparatus 111, the information collection apparatus 112, and the SOC chip 113 in the identity authentication module 110 in the electronic device 200 are usually components that are in the electronic device 200 and that can be used to detect the trigger operation of the user and the identity information of the user to which the electronic device 200 belongs. The control module 120 is a TEE system that is in the electronic device 200 and that is developed based on the security chip 121, and is usually used in scenarios such as electronic device unlocking and electronic payment, to improve security of the electronic device 200. The power module 131 is a battery that supplies power to each component in the electronic device 200. The audio driver module 150 is usually driver hardware that is in the electronic device 200 and that receives the audio data collected by the microphone module 140. In embodiments of this application, the switch module 132 is added to the electronic device 200, and the switch module 132 is connected to the control module 120, the microphone module 140, and the power module 131 in the electronic device 200. In addition, the identity authentication module 110 in the electronic device 200 is connected to both the audio driver module 150 and the control module 120, to form the microphone control system 100 provided in embodiments of this application.

Based on the microphone control system 100 provided in embodiments of this application, the user may control enabling and disabling of the microphone 141 according to an actual requirement. After detecting the trigger operation of switching the operating status of the microphone 141 by the user, the identity authentication module 110 in the microphone control system 100 may verify the identity information of the user, and send, to the control module 120 after the verification succeeds, the switch signal used to control the on/off status of the switch module 132 in the power supply module 130. The identity information of the user is verified, to avoid an accidental trigger of the user, and prevent a user to which the electronic device does not belong from enabling or disabling the microphone 141. The control module 120 may control, based on the switch signal by controlling the on/off status of the switch module 132, the power supply status of supplying power by the power module 131 to the microphone module 140, to further control the operating status of the microphone module 140, so that the microphone 141 can pick up the sound in the environment only when the switch module 132 is in the on state. This avoids privacy leakage. In addition, the control module 120 is a security chip 121 that can run the trusted execution environment. The security chip is more secure than a common chip, and is less susceptible to control by malicious software. Compared with a method for controlling a power supply status of a power supply module 130 by using the common chip, the method for controlling the power supply status of the power supply module 130 by using the security chip 121 in this application can further improve security of the microphone control system 100.

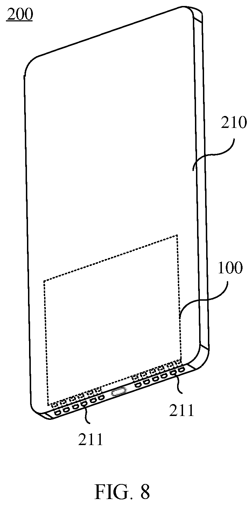

Based on a same concept, an embodiment of this application further provides an electronic device 200. Refer to a diagram of a structure of an electronic device 200 shown as FIG. 8. The electronic device 200 includes a housing 210 and the microphone control system 100 in the foregoing embodiments. The microphone control system 100 is disposed inside the housing 210, a sound inlet hole 211 is provided in the housing 210, and the sound inlet hole 211 is connected to at least one microphone 141 in a microphone module 140 of the microphone control system 100. When the microphone 141 in the microphone module 140 is in an enabled state, a call sound of a user may be transmitted to the microphone 141 through the sound inlet hole 211, and the microphone 141 may transmit collected audio data to an audio driver module 150.

Optionally, the electronic device 200 further includes a touch panel, and the touch panel may be a foldable display or a non-foldable display. The touch panel may display a mode switching control used by the user to switch an operating status of the microphone module 140, so that a trigger apparatus 111 in the microphone control system 100 may detect a touch operation performed by the user on the mode switching control.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A microphone control system, comprising an identity authentication module (110), a control module (120), a power supply module (130), and a microphone module (140) that are sequentially connected, wherein
the identity authentication module (110) is configured to: verify identity information of a user based on a trigger operation of the user, and send a switch signal to the control module (120) after the verification succeeds;
the control module (120) is configured to control a power supply status of the power supply module (130) based on the switch signal, wherein the power supply status comprises a power-off state and a normal state; and
the power supply module (130) is configured to supply power to the microphone module (140) when being in the normal state.

2. The microphone control system according to claim 1, wherein the identity authentication module (110) comprises a trigger apparatus (111), an information collection apparatus (112), and an SOC chip (113);
the trigger apparatus (111) and the information collection apparatus (112) are both connected to the SOC chip (113), and the SOC chip (113) is connected to the control module (120);
the trigger apparatus (111) is configured to detect the trigger operation; and
the SOC chip (113) is configured to control, based on the trigger operation, the information collection apparatus (112) to collect and verify the identity information.

3. The microphone control system according to claim 2, wherein the trigger apparatus (111) comprises a direction sensor and/or an angle sensor.

4. The microphone control system according to claim 2, wherein the information collection apparatus (112) comprises a fingerprint sensor and/or an image sensor.

5. The microphone control system according to claim 1, wherein the control module (120) is a security chip.

6. The microphone control system according to any one of claims 1 to 5, wherein the power supply module (130) comprises a power module (131) and a switch module (132);
the power module (131) is connected to the microphone module (140) through the switch module (132), and the control module (120) is connected to the switch module (132);
the control module (120) is configured to control an operating status of the microphone module (140) based on the switch signal by controlling an on/off status of the switch module (132), wherein the on/off status comprises an on state and an off state; and
the power module (131) is configured to supply power to the microphone module (140) when the switch module (132) is in the on state.

7. The microphone control system according to claim 6, wherein the microphone module (140) comprises at least one microphone (141).

8. The microphone control system according to claim 7, wherein the switch module (132) comprises one switch chip (1321);
the switch chip (1321) is connected to both the control module (120) and the at least one microphone (141); and
the control module (120) is configured to control an on/off status of the switch chip (1321) based on the switch signal.

9. The microphone control system according to claim 7, wherein the switch module (132) comprises at least two switch chips (1321), and a quantity of microphones (141) is the same as a quantity of switch chips (1321);
the at least two switch chips (1321) each are connected to the control module (120), and the switch chips (1321) are connected to the microphones (141) in one-to-one correspondence; and
the control module (120) is configured to control on/off statuses of the at least two switch chips (1321) based on the switch signal.

10. The microphone control system according to any one of claims 1 to 5 and 7 to 9, further comprising an audio driver module (150), wherein
the audio driver module (150) is connected to both the identity authentication module (110) and the microphone module (140);
the identity authentication module (110) is further configured to: determine an operating status of the microphone module (140) based on the switch signal, and send the operating status to the audio driver module (150), wherein the operating status is an enabled state or a disabled state; and
the audio driver module (150) is configured to perform fault detection on the microphone module (140) when the microphone module (140) is in the enabled state.

11. An electronic device, comprising the microphone control system (100) according to any one of claims 1 to 10.
